Europäisches Patentamt

European Patent Office

Office européen des brevets

(19)

(11) Numéro de publication: **0 242 269**
**B1**

(12) **FASCICULE DE BREVET EUROPEEN**

(45) Date de publication du fascicule du brevet:
28.06.89

(21) Numéro de dépôt: 87400764.4

(22) Date de dépôt: 07.04.87

(51) Int. Cl.⁴: **B60T 13/52**

(54) Servomoteur d'assistance au freinage.

(30) Priorité: 08.04.86 FR 8604975
23.04.86 FR 8605857

(43) Date de publication de la demande:
21.10.87 Bulletin 87/43

(45) Mention de la délivrance du brevet:
28.06.89 Bulletin 89/26

(84) Etats contractants désignés:
DE ES GB IT

(56) Documents cités:
EP-A-0 101 658
EP-A-0 153 238
EP-A-0 153 888
DE-A-3 039 725
GB-A-2 064 690

(73) Titulaire: BENDIX France Société Anonyme dite:,
126, rue de Stalingrad, F-93700 Drancy(FR)

(72) Inventeur: Gautier, Jean-Pierre, 46 ter Av. Louis Blanc,
F-93600 Aulnay sous Bois(FR)
Inventeur: Bequet, Frank, "Les Argonautes" 16, Allée de
la Toison d'Or, F-94000 Créteil(FR)
Inventeur: Carre, Jean-Jacques, 59, Boulevard de l'Est,
F-93340 Le Raincy(FR)

(74) Mandataire: Lejet, Christian et al, Division Technique
Service Brevets BENDIX Europe 126, rue de Stalingrad,
F-93700 Drancy(FR)

**Description**

La présente invention concerne les servomoteurs d'assistance au freinage, notamment pour véhicules automobiles, et plus particulièrement les servomoteurs pneumatiques du type comprenant un boîtier, une structure de piston divisant intérieurement le boîtier en deux chambres, un moyen de valve de distribution disposé dans un corps de valve solidaire de la structure de piston et actionnable par un organe d'entrée pour créer sélectivement une différentielle de pression entre les chambres, le moyen de valve comportant : un plongeur, monté à coulissement axial dans un alésage central du corps de valve et relié à l'organe d'entrée, le plongeur comportant au moins un premier épaulement périphérique et définissant, une de ses extrémités, un premier siège de clapet, un second siège de clapet formé dans le corps de valve, concentriquement au premier siège de clapet, et un moyen de clapet monté dans le corps de valve et sollicité élastiquement vers les premier et second sièges de clapet, un ressort de rappel prenant appui dans le corps de valve et sollicitant l'organe d'entrée dans la direction opposée aux sièges de clapet, et des moyens de positionnement du plongeur, disposés dans le corps de valve et coopérant avec le plongeur pour lui assigner au moins deux positions déterminées distinctes relativement au corps de valve, typiquement une position de retrait maximum ou de surouverture au retour en cas de relâchement de l'effort sur l'organe d'entrée lors d'une phase de freinage, d'une part, et une position de repos assurant, dans la configuration de repos du servomoteur, une course d'actionnement minimale du servomoteur, d'autre part.

Des servomoteurs de ce type sont décrits dans les documents FR-A-2 469 589, EP-A-0 153 888 et EP-A-0 153 238. Dans le premier de ces documents, les moyens de positionnement du plongeur sont constitués par une clé montée avec possibilité de débattement axial dans le corps de valve et susceptible de coopérer en butée contre la paroi arrière du boîtier, dans un agencement ne permettant pas de garantir un déplacement sûr et précis de la clé de retenue par rapport au corps de valve ni d'éviter des risques d'interférences avec le mouvement relatif du plongeur ou de mise en travers de la clé de retenue par rapport au plongeur et/ou au corps de valve, en raison notamment des problèmes du maintien "flottant" de la clé dans le corps de valve compte tenu des nombreuses sollicitations antagonistes auxquelles est soumise la clé. Dans le second de ces documents, les moyens de positionnement du plongeur sont constitués par un élément tourillonnant dans un logement transversal du corps de valve sous la commande d'un levier palpeur et présentant deux surfaces de cames coopérant respectivement avec un épaulement annulaire périphérique du palpeur et avec une surface périphérique adjacente du palpeur, dans un agencement plus précis, en fonctionnement, que celui du document précédent mais induisant un couple de basculement sur le palpeur susceptible, à la longue, d'affecter la précision du servomoteur lors de sa mise en oeuvre et satisfaisant difficilement aux tests dits "d'arrachement" simulant une levée intempestive de la pédale de freinage par le pied du conducteur du véhicule et se traduisant par un effort de traction important exercé sur l'organe d'entrée. Dans le troisième de ces documents, les moyens de positionnement sont constitués également par une clé unique montée pivotement sur le corps de valve, dans un agencement au fonctionnement plus précis que celui du document précédent mais posant, comme ce dernier, des problèmes de tenue mécanique de la clé compte-tenu des efforts antagonistes auxquels elle est soumise, pouvant induire des pertes de sensibilité du servomoteur, et imposant de plus un dimensionnement radial relatif particulier du corps de valve et de la partie centrale arrière du boîtier.

La présente invention a pour objet de proposer un servomoteur d'assistance au freinage du type sus mentionné, de construction simple et robuste, au fonctionnement précis et fiable et n'affectant notamment pas les facultés de coulissement co-axial du plongeur dans l'alésage central du corps de valve.

Pour ce faire, selon une caractéristique de l'invention, les moyens de positionnement du plongeur sont constitués par la combinaison d'un premier organe de positionnement fixé dans le corps de valve et ayant une extrémité intérieure susceptible de coopérer avec une première zone du premier épaulement du plongeur pour positionner ce dernier dans une position de retrait maximum déterminée, et d'un second organe de positionnement monté à pivotement dans le corps de valve et ayant une première portion susceptible de coopérer avec une seconde zone de l'épaulement du plongeur, et une seconde portion susceptible de coopérer, au voisinage de la position de repos du servomoteur, avec un élément stationnaire lié au boîtier pour placer, au moins dans cette position de repos du servomoteur, le second organe de positionnement dans une position angulaire déterminée vis-à-vis du corps de valve positionnant, via la première portion du second organe de retenue, le plongeur dans une position de repos déterminée.

Selon une deuxième caractéristique de l'invention, les moyens de positionnement du plongeur sont constitués par la combinaison d'un premier organe de positionnement, monté fixe dans l'ouverture radiale et ayant une zone d'extrémité intérieure s'étendant dans l'alésage central, et d'un second organe de positionnement monté à basculement dans l'ouverture radiale et comprenant une zone d'extrémité intérieure s'étendant dans l'alésage central, entre le premier épaulement du plongeur et la zone d'extrémité intérieure du premier organe de positionnement et coopérant en contact d'articulation avec cette dernière, une portion centrale et une extrémité extérieure susceptible de coopérer, au voisinage de la position de repos du servomoteur, avec un élément stationnaire lié au boîtier pour faire basculer le second organe de positionnement depuis une première position, où les premier et second organes de positionnement sont accolés axialement, et une seconde position, dans là position de repos du servomoteur, où le second organe de positionnement,

en appui par sa zone d'extrémité intérieure contre l'épaulement du plongeur, est écartée angulairement du premier organe de positionnement.

Avec un tel agencement la position de retrait ou de sur-ouverture du plongeur vis-à-vis du corps de valve portant le second siège de clapet est parfaitement définie par venue en butée du premier épaulement du plongeur contre le premier organe de positionnement monté fixe dans le corps de valve, sans que le second organe de retenue ne soit sollicité à cette occasion. Par contre, lorsque le servomoteur atteint sa position de repos, le second organe de positionnement est alors mis en oeuvre, via sa seconde portion, pour repousser vers l'avant, via sa première portion, le plongeur depuis sa position de retrait précédemment adoptée lors du défreinage et l'amener dans sa position de repos sans mettre en oeuvre, pour ce faire, le premier organe de positionnement. Lors de ces manoeuvres successives, les premier et second organes de positionnement étant chacun immobilisé axialement par rapport au corps de valve et intervenant sur des zones opposées de l'épaulement du plongeur, les risques de mise en biais, à la longue, du plongeur dans l'alésage du corps de valve sont totalement supprimés.

D'autres caractéristiques et avantages de la présente invention ressortiront de la description suivante de trois modes de réalisation, donnés à titre illustratif mais nullement limitatif, faite en relation avec les dessins annexés, sur lesquels :

- la figure 1 est une vue partielle en coupe longitudinale d'un premier mode de réalisation d'un servomoteur d'assistance au freinage selon l'invention ;
- la figure 2 est une vue schématique en coupe transversale suivant le plan de coupe II-II de la figure 1 ;
- la figure 3 est une vue analogue à la figure 1 montrant un second mode de réalisation de l'invention ;
- la figure 4 est une vue en coupe transversale, analogue à celle de la figure 2, du mode de réalisation de la figure 3.
- la figure 5 est une vue partielle en coupe longitudinale d'un troisième mode de réalistion d'un servomoteur d'assistance au freinage selon l'invention ;
- la figure 6 est une vue schématique en coupe transversale suivant la ligne de coupe VI-VI de la figure 5 ; et
- la figure 7 est une vue schématique à plus grande échelle montrant l'agencement relatif des zones d'extrémités intérieures des premier et second organes de positionnnement du servomoteur de la figure 5.

Dans la description qui va suivre et sur les dessins, les éléments identiques ou analogues portent les mêmes chiffres de référence, éventuellement indicés.

Comme représenté sur les dessins, un servomoteur d'assistance pneumatique au freinage selon l'invention comprend un boîtier 1, constitué par l'assemblage périphérique d'une paroi de boîtier avant 2 et d'une paroi de boîtier arrière 3 et divisé intérieurement par une paroi de piston mobile 4 en une chambre avant 5, ou chambre de dépression, et une chambre arrière 6, ou chambre de travail. La paroi mobile 4 est fixée centralement sur un moyeu 7, réalisé typiquement en matériau plastique, se prolongeant vers l'arrière et vers l'extérieur par un corps de valve tubulaire 8 guidé à coulissement étanche par un ensemble de guidage et d'étanchéité 9 monté dans un prolongement tubulaire arrière 10 de la paroi arrière 3 du boîtier 1.

Dans le corps de valve 8 est monté un moyen de clapet sollicité élastiquement, désigné généralement par la référence 11, destiné à coopérer avec un siège fixe de clapet 12, formé centralement dans le corps de valve, et avec un siège mobile de clapet 13 formé par l'extrémité arrière d'un plongeur 14 coulissant dans un alésage central 15 du corps de valve 8 et solidarisé à l'extrémité d'une tige d'entrée et d'actionnement 16 dont l'autre extrémité est destinée être reliée à une pédale de frein de véhicule (non représentée). La tige 16 (et, partant, le plongeur 14) est sollicitée vers l'arrière par un ressort de rappel 17 prenant appui sur un épaulement de la tige 16 et sur un épaulement à l'intérieur du corps de valve 8. Par son extrémité opposée à la tige 16, le plongeur 14 est susceptible de coopérer avec un disque de réaction en matériau élastomère 18 intercalé entre le moyeu 7 et une tige de sortie 19 du servomoteur, destinée à actionner le piston d'un maître-cylindre associé au servomoteur (non représenté). Le plongeur 14 comporte une rainure annulaire périphérique 20 définissant un premier épaulement 21 dirigé vers l'arrière et un second épaulement 22 lui faisant face.

Conformément à l'invention, une clé ou premier organe de positionnement 23 est monté fixe dans le corps de valve 8. La clé 23, par exemple du type décrit dans le document EP-A-0 101 658 au nom de la demanderesse, dont le contenu est supposé intégré ici pour référence, réalisée à partir d'une plaque métallique, présente une configuration générale plane et est engagée à force dans une rainure radiale 24 formée dans le corps de valve 8 et débouchant dans l'alésage 15 de coulissement du plongeur 14. La clé 23 comporte une extrémité intérieure découpée en forme de U délimitée par une découpe circulaire 25 et deux pattes d'extrémité 26 formant ensemble, d'un côté d'un plan diamétral D du plongeur 14, une zone d'engagement de profil sensiblement semi-circulaire s'engageant sans contact radial dans la gorge annulaire 20 du plongeur 14 et susceptible en conséquence de coopérer en engagement de butée axiale avec l'un ou l'autre des épaulements 21 et 22 du plongeur 14 de façon à délimiter les deux positions extrêmes de déplacement axial du plongeur 14 vis-à-vis du corps de valve 8. La clé 23 est verrouillée radialement dans le corps de valve 8 par un ergot profilé 27 du corps de valve s'étendant axialement en saillie dans la rainure 24 et reçu dans une fenêtre formée dans la partie de voile pleine de la clé 23.

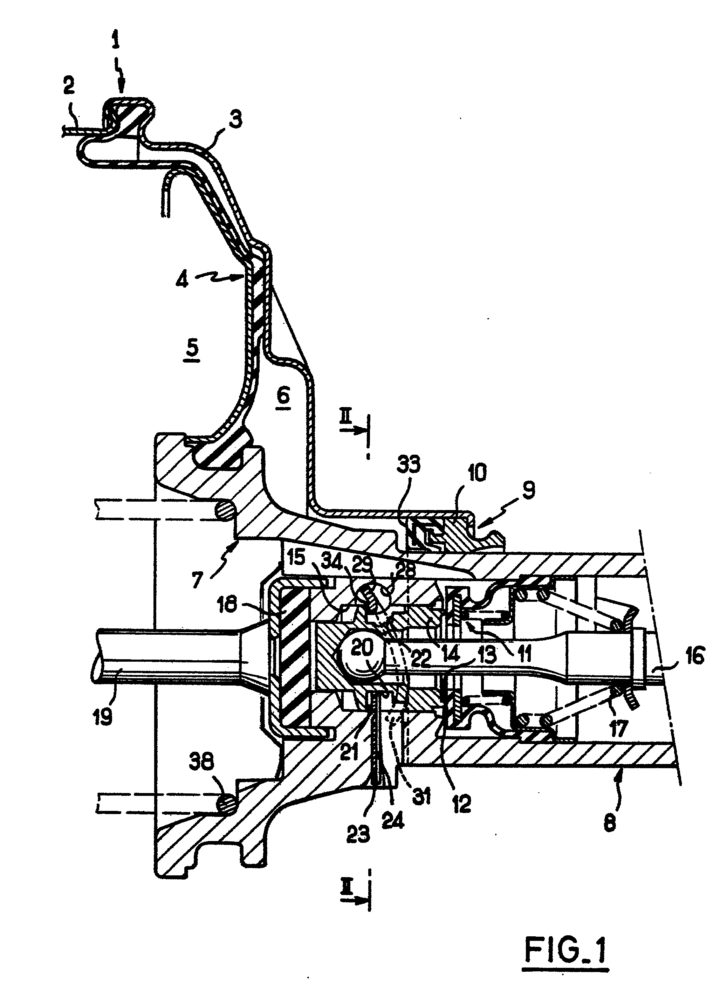

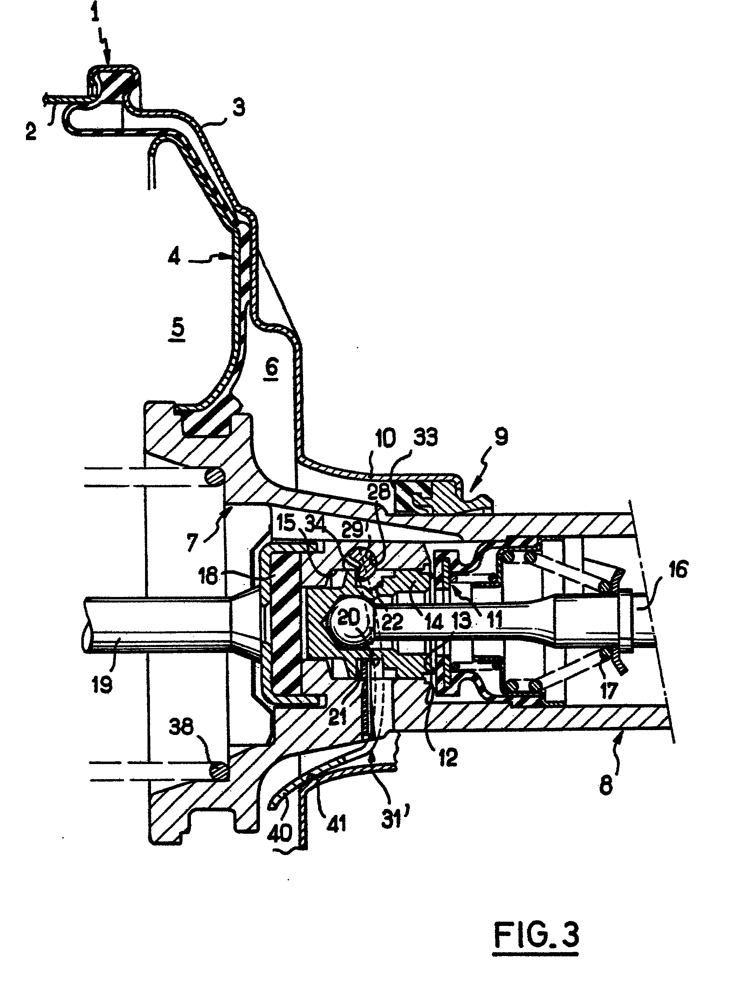

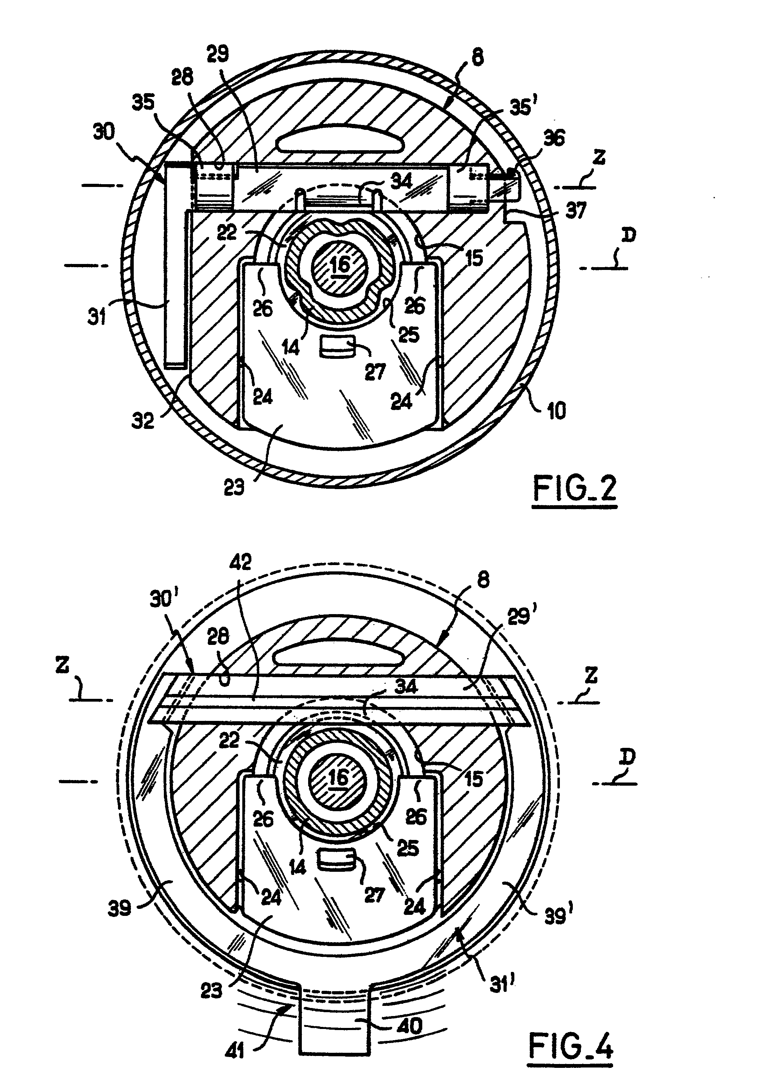

Le corps de valve 8 comporte, du côté du plan diamétral D du plongeur 14 opposé à celui de la rainure 24 recevant la clé 23, un alésage transversal 28 d'axe Z débouchant centralement dans l'alésage 15 du plongeur 14 et dans lequel est montée à rotation, autour de l'axe Z, une première portion 29 d'un second organe de positionnement, désigné généralement par la référence 30, comportant une seconde portion ou portion d'actionnement 31 extérieure au corps de valve 8. Dans le mode de réalisation des figures 1 et 2, la première portion 29 est constituée sous la forme d'un élément de plaque métallique allongé formé d'une seule pièce avec la seconde portion 31 conformée sous la forme d'un bras à profil arrondi se débattant angulairement au voisinage d'un pan coupé externe 32 du corps de valve 8 et dont la face arrière est susceptible de coopérer en contact d'engagement à roulement avec une surface stationnaire liée au boîtier et constituée typiquement par la face annulaire avant 33 du joint d'étanchéité en matériau élastomère de l'ensemble de guidage et d'étanchéité 9 monté dans le prolongement tubulaire 10. La première portion 29 du second organe de retenue comporte centralement, dans sa zone faisant saillie dans l'alésage 15, une partie découpée rabattue vers l'avant et profilée pour constituer une surface de came 34 susceptible de coopérer avec une zone du premier épaulement 21 située du côté du plan diamétral D opposé à la clé 23.

Le fonctionnement du servomoteur selon l'invention est le suivant :

lorsque le servomoteur est actionné, en exerçant un effort axial vers l'avant sur la tige 16, le plongeur 14 se déplace vers l'avant dans l'alésage 15 provoquant, en premier lieu, après une brève course initiale d'actionnement, la venue en contact de l'élément de clapet 11 contre le siège de clapet fixe 12 pour isoler l'une de l'autre les deux chambres 5 et 6, puis, en second lieu, ouvrir un passage entre l'élément de clapet 11 et le siège de clapet mobile 13 pour admettre la pression atmosphérique dans la chambre de travail 6 et réaliser ainsi une assistance sur la tige de sortie 19. Lors d'une telle phase de freinage, le plongeur 14 n'interfère avec aucun des moyens de positionnement 23 et 30. En cas de défaillance de la source de vide, le plongeur 14 vient en butée par son second épaulement 22 contre la clé 23, reliant ainsi en poussée en mode non assisté, la tige d'entrée 16 et la tige de sortie 19. Si, en fonctionnement normal assisté, durant une telle phase de freinage, l'effort exercé sur la tige d'entrée 16 est relâché, la tige 16 se déplace vers l'arrière relativement au corps de valve 8 sous l'effet du ressort de rappel 17, et le plongeur 14, revenant en contact par son siège mobile 13 avec l'élément de clapet 11, déplace ce dernier élastiquement vers l'arrière pour le dégager du siège de clapet fixe 12 et rétablir une communication entre ces deux chambres 5 et 6. Pour permettre un rééquilibrage rapide de pression (en l'occurence de dépression) entre ces deux chambres 5 et 6, le plongeur 14 est autorisé à reculer d'une distance relativement importante vis-à-vis du corps de valve 8, le passage entre le siège de clapet fixe 12 et l'élément de clapet 11 étant déterminé de façon précise par venue en butée, sous l'effet du ressort de rappel 17, du premier épaulement 21 contre la clé 23. Lors de cette phase de fonctionnement, le second organe de positionnement 30, pivotant librement dans le corps de valve 8, n'interfère pas dans le déplacement du plongeur 14 vis-à- vis du corps de valve 8. Par contre, lorsque l'effort sur la tige d'entrée 16 est définitivement relâché, la paroi mobile 4 est ramenée, sous l'effet de son ressort de rappel propre 38, en butée contre la paroi arrière 3 du boîtier 1. Ce faisant, lorsque le servomoteur arrive au voisinage de sa position de repos, le bras 31 du second organe de positionnement 30 vient porter contre la surface stationnaire 33 en provoquant une rotation dextrogyre (sur la figure 1) de la première portion 29 de sorte que la surface de came 34, par coopération avec le premier épaulement 21 du plongeur 14 ayant conservé jusqu'ici une position de retrait relative, ramène celui-ci vers l'avant depuis sa position de retrait préalable de façon à réduire le jeu entre l'élément de clapet 11 et le siège de clapet fixe 12. Ce jeu au repos, correspondant à la course morte d'actionnement du servomoteur, est donc défini de façon précise et parfaitement reproductible par la position angulaire finalement adoptée par le second organe de positionnement 30 en appui sur la surface stationnaire 33 lorsque la paroi mobile 4 est venue en butée sur la paroi arrière 3, comme représenté sur la figure 1. Ce jeu peut être adapté et déterminé avec une grande précision selon le conformage du bras 31 et/ou de la première surface de came 34, la position maximum de retrait ou de sur-ouverture au retour du plongeur 14 vis-à-vis du corps de valve 8 étant, quant à elle, déterminée également avec une grande précision, par construction, indépendamment dans une large mesure du second organe de positionnement 30, par la distance axiale entre la rainure radiale 24 recevant la clé 23 et le siège de clapet fixe 12.

La première portion 29 du second organe de positionnement 30 est avantageusement associée à une paire de coussinets cylindriques en matériau plastique 35 et 35' enfichés latéralement et en bout, respectivement, sur la lame 29 pour garantir un centrage en rotation de cette dernière dans l'alésage 28. On prévoiera avantageusement un léger effet de friction entre les coussinets 35 et 35' et l'alésage 28 pour amortir les facultés de débattement libre du second organe de retenue 30 dans le corps de valve 8. Dans le mode de réalisation représenté sur la figure 2, le second organe de retenue 30 est maintenu en place dans le corps de valve 8 en prévoyant une extrémité de la première portion 29 opposée au bras 31 sous la forme d'une languette 36 traversant une extrémité de diamètre réduit de l'alésage 28, puis rabattue latéralement au voisinage d'un second méplat de petites dimensions 37 formé dans la périphérie du corps de valve 8.

Le mode de réalisation représenté sur la figure 3 et 4 est, dans ses grandes lignes, analogue à celui qui vient d'être décrit et s'en distingue essentiellement par la configuration du second organe 30'. Dans ce mode de realisation, la première portion 29' se présente sous la forme d'un organe monté à rotation autour de l'axe Z dans l'alésage 28 du corps de valve 8 et dépassant latéralement de part et d'autre de ce dernier. Sur les extrémités en saillie de la première portion 29' sont montées, par exemple par insertion en bout, les extrémités d'une paire de bras 39, 39' en forme d'arcs de cercle de rayons intérieur et extérieur, en vue en plan (figure 4), respectivement légèrement supérieur au rayon d'un cercle exinscrit au corps de valve 8 et inférieur au rayon interne du prolongement tubulaire 10. Les deux bras 39 et 39', formés à partir d'une tôle métallique, se rejoignent centralement, à l'opposé de la première portion 29' par rapport au plan diamétral D, en constituant une languette profilée s'étendant vers l'avant 40 formant élément de came suiveur destiné à coopérer en glissement avec une surface de came stationnaire 41 constituée par exemple par le profil de raccordement entre le prolongement tubulaire 10 et la zone radiale centrale adjacente de la paroi arrière 3 du boîtier 1. Dans le mode de réalisation représenté sur les figures 3 et 4, la surface de came 34 est constituée par une rainure profilée 42 taillée longitudinalement dans la première portion 29' massive. En variante, la première portion 29' peut être réalisée sous la forme d'un tube en tôle enroulée dont une portion centrale est déformée et profilée de façon adéquate pour constituer la surface de came 34.

Le fonctionnement de ce second mode de réalisation est en tout point identique à celui décrit précédemment en relation avec les figures 1 et 2, si ce n'est que la position de repos du plongeur 14, assignée par la surface de rampe 34, n'est pas déterminée ici par venue en butée axiale de la seconde portion 31' mais par la position dans l'espace du point de contact entre la languette 40 et la surface de rampe 41 lorsque la paroi mobile 4 est en butée contre la paroi arrière 3 du boîtier 1, ce point de contact pouvant être déterminé avec précision en conférant aux bras 39 et 39' et à la languette 40 une conformation adaptée.

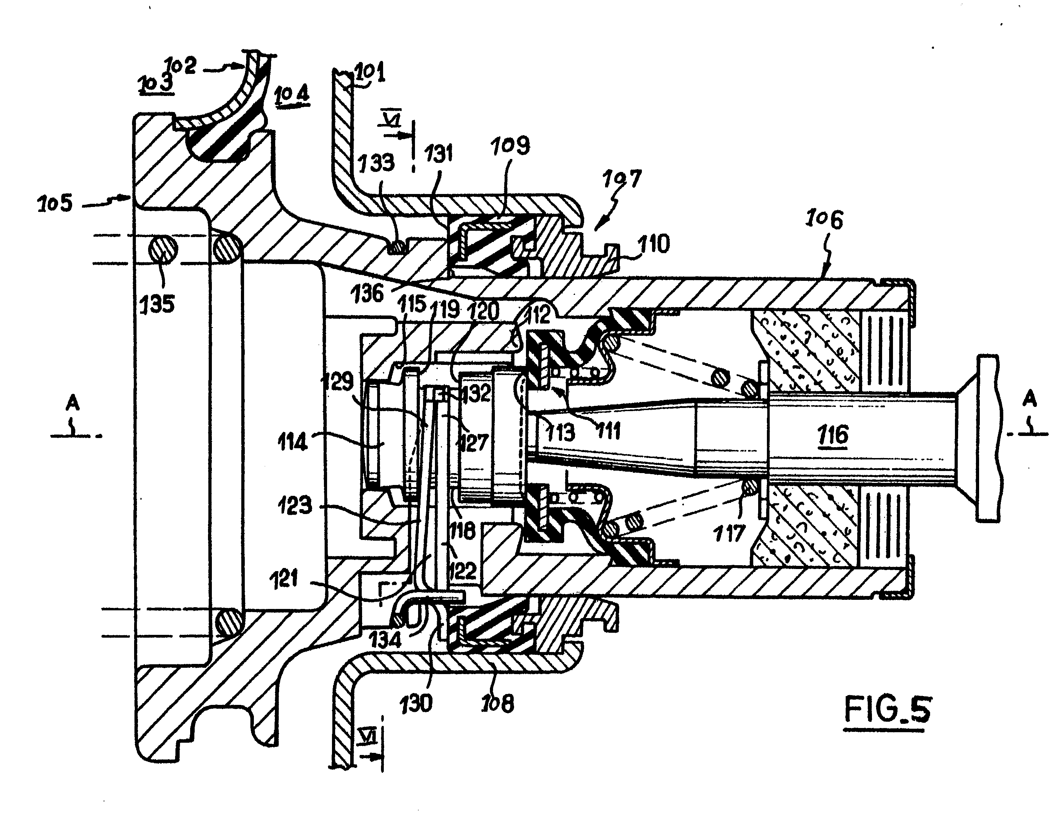

Comme représenté sur les figures 5 à 7, un servomoteur d'assistance pneumatique au freinage selon l'invention comprend un boîtier, dont on reconnaît sur la figure 5, la portion centrale de la paroi arrière 101, divisé intérieurement par une paroi de piston mobile 102 en une chambre avant 103, ou chambre de dépression, et une chambre arrière 104, ou chambre de travail. La paroi mobile 102 est fixée centralement sur un moyeu 105, réalisé typiquement en matériau plastique, se prolongeant vers l'arrière et vers l'extérieur par un corps de valve tubulaire 106 guidé à coulissement étanche par un ensemble de guidage et d'étanchéité 107 monté dans un prolongement tubulaire arrière 108 de la paroi arrière 101 du boîtier et constitué d'un ensemble associé d'un joint annulaire en matériau élastomère armé 109 et d'une bague annulaire de guidage 110, par exemple en matériau plastique rigide.

Dans le corps de valve 106 est monté un moyen de clapet sollicité élastiquement axialement, désigné généralement par la référence 111, destiné à coopérer avec un siège de clapet fixe 112, formé centralement dans le corps de valve 106, et avec un siège de clapet 113 mobile formé par l'extrémité arrière d'un plongeur de valve 114 coulissant dans un alésage central 115 du corps de valve coaxial à l'axe A de symétrie de révolution du moyeu 105, le plongeur 114 étant solidarisé à l'extrémité d'une tige d'entré et d'actionnement 116 dont l'autre extrémité est destinée à être reliée à une pédale de frein de véhicule (non représentée). Le moyeu 105 est associé, en configuration de montage final, à une tige de sortie (non représentée) couplée à un piston de maître-cylindre de freinage. La tige 116 (et, partant, le plongeur 114) est sollicitée axialement vers l'arrière par un ressort de rappel 117 prenant appui sur un épaulement de la tige 116 et sur un épaulement à l'intérieur du corps de valve 106. Le plongeur 114 comporte une rainure annulaire périphérique 118 définissant un premier épaulement radial 119 dirigé vers l'arrière et un second épaulement radial 120 lui faisant face. Le corps de valve 106 comporte une ouverture radiale transversale 121 débouchant dans l'alésage 115 et établissant notamment une communication de fluide entre le siège de clapet fixe 112 et la chambre arrière 104 du servomoteur.

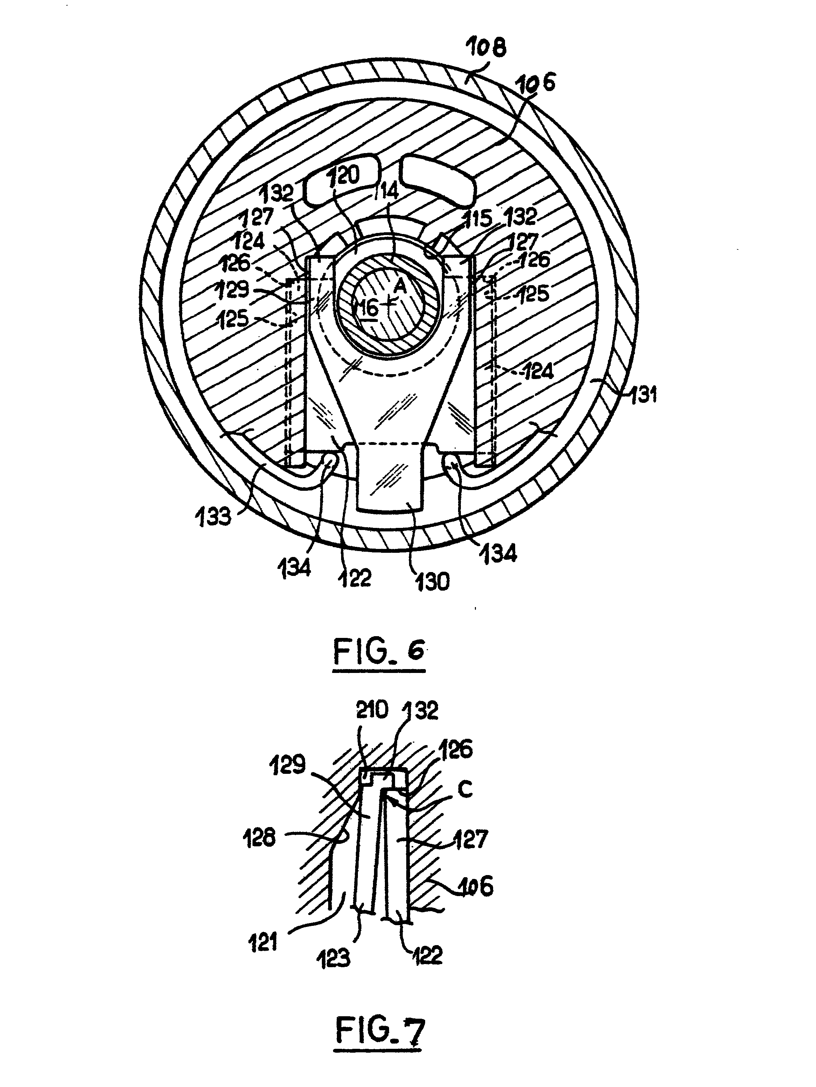

Conformément à l'invention, dans l'ouverture radiale 121 sont disposés un premier organe de positionnement fixe 122 et un second organe de positionnement basculant 123. Le premier organe de positionnement 122, réalisé à partir d'une plaque métallique, présente une configuration générale plane rectangulaire et est monté par des ailes latérales parallèles 124 dans des rainures parallèles en vis-à-vis 125 formées latéralement, de part et d'autre de l'ouverture raidiale 121 et se prolongeant vers l'intérieur, au-delà de l'axe A du servomoteur en se terminant par des épaulements 126 limitant l'insertion du premier organe de positionnement 122 dans le corps de valve 106. Comme on le voit sur la figure 6, le premier organe de positionnement 122 comporte une zone d'extrémité intérieure s'étendant partiellement dans l'alésage central 115 et, sans contact radial, dans la rainure annulaire 118 du plongeur 114 et présentant un profil en U avec deux bras latéraux 127 venant en butée par leurs extrémittés contre les épaulements 126.

L'ouverture radiale 121 présente, en avant du premier orgne de positionnement 122, un profifil axialement évolutif avec une portion principale débouchant extérieurement d'extension radiale reativement importante se rétrécissannt vers l'intérieur, comme figuré en 128 sur la figure 7, pour constituer, de part et d'autre de l'alésage 115, une portion dd'extrémité intérieure 210 d'extension axiale réduite et s'étendant radialement au-delà des épaulements 126 des rainures 125. Le secoond organe de positionnement 123, réalisé typiquement à partir d'une plaque métallique, présente une poron de corps centrale de forme générale trapézoïdale se prolongeant, intérieurement, par une zone d'extrémité présentant, comme le premier organe de positionnonnement 122, un profil en U avec deux bras latéraux 129 partiellement reçus dans la rainure annulaire 118 du plongeur 114, et, extérieurement, par une zone d'extrémité extérieure 130 faisant saillie radialement hors du corrps de valve 106 et présentant une extrémité, décalée axialement vers l'arrière par rapport à la partie decorps principale, pour coopérer en appui contre une face de référence fixe d'un élément stationnaire lié au boîtier et constituée avantageusement, dans l'exemple représenté, par la face annulaire avant 131 du joint 109 de l'ensemble de guidage et d'étanchéité 107. Les extrémités des bras 129 de la zone d'extrémité intérieure du second organe de positionnement 123 s'étendent dans la portion d'extrémité intérieure 210 de l'ouverture radiale 121 au-delà du bord d'extrémité des bras 127 de la zone d'extrémité intérieure du premier organe de positionnement 122, ces extrémités des bras 129 comportant des parties 132, rabattues ou découpées et déformés, s'étendant axialement vers l''arrière au-dessus du bord d'extrémité des bras 127 dans un agencement assurant la rétention des etrémités des bras 129 du second organe de positionnement 123 dans la portion d'extrémité intérieure 210 de l'ouverture 121 et en contact formant charnière C avec l'extrémité des bras 127 du premier organe de positionnement 122. Le premier organe de positionnement 122 peut être introduit légèrement à force dans les rainures en vis-à-vis 125 ou à coulissement juste dans ces dernières, auquel cas un ressort fil de maintien à configuration générale en C 133 est disposé dans une rainure périphérique du corps de valve 106, les extrémités en regard du ressort 133 étant rabattues à l'intérieur de la zone débouchant extérieurement de l'ouverture 121 et comportant des portions repliées 134 s'étendant axialement de part et d'autre de la zone d'extrémité 130 du second organe de positionnement 123 en appui contre les arêtes extérieures du premier organe de positionnement 122 pour maintenir celui-ci et, partant, via les portions d'extrémités 132, le second organe de positionnement 123 dans l'ouverture 121.

Le fonctionnement du servomoteur selon l'invention est le suuivant : lorsque le servomoteur est actionné, en exerçant un effort axial vers l'avant sur la tige 116, le plongeur 114 se déplace vers l'avant dans l'alésage 115 provoquant, en premier lieu, après une brève course initiale d'actionnement, la venue en contact de l'élément de clapet 111 contre le premier siège de clapet 112 pour isoler l'une de l'autre les deux chambres 103 et 104, puis, en second lieu, ouvrir un passage de fluide entre l'élément de clapet 111 et le second siège de clapet 113 pour admettre la pression atmosphérique dans la chambre de travail 104 et déplacer ainsi la structure de piston 102 vers l'avant à l'encontre d'un ressort de rappel 135 sollicitant ce dernier dans la direction vers la paroi arrière 101 du boîtier. Lors d'une telle phase de freinage, le plongeur 114 n'interfère avec aucun des organes de positionnement 122 et 123 et le second organe de positionnement 121 adopte ou conserve une position indifférente. En cas de défaillance de la source de vide, le plongeur 114 vient en butée par son second épaulement 120 contre le premier organe de positionnement 122, solidarisant ainsi en déplacement vers l'avant le moyeu 105 et la tige 116. Si, en fonctionnement normal assisté, durant une telle phase de freinage, l'effort exercé sur la tige d'entrée 116 est relâché, cette dernière se déplace vers l'arrière relativement au corps de valve 106 sous l'effet du ressort de rappel 117 et le plongeur 114, revenant en contact par son siège 113 avec l'élément de claper 111, déplace ce dernier élastiquement vers l'arrière pour le dégager du siège de clapet 112 et rétablir une communication entre les chambres 103 et 104. Pour permettre un rééquilibrage rapide de pression (en l'occurence de dépression) entre ces deux chambres 103 et 104, le plongeur 114 est autorisé à reculer axialement d'une distance relativement importante vis-à-vis du corps de valve 106, le passage, dit de sur-ouverture entre le siège de clapet 112 et l'élément de clapet 111 étant alors déterminé de façon précise par venue en butée, sous l'effet du ressort de rappel 117, du premier épaulement 119 du plongeur 114 contre la zone d'extrémité intérieure du second organe de positionnement 123 qui vient alors se plaquer à plat contre le premier organe de positionnement 122, le jeu de surouverture étant ainsi déterminé, par construction, par la position relative des rainures 125 dans le corps de valve 106 vis-à-vis du plan du siège fixe 112 et par l'épaisseur axiale cumulée des organes de positionnement 122 et 123. Lorsque l'effort sur la tige d'entrée est définitivement relâché, le moyeu 105 et la structure de piston 102 sont ramenés, sous l'effet du ressort de rappel 135, vers la paroi arrière 101 du boîtier. Selon un aspect de l'invention, la position de repos de la structure de piston 102 et du moyeu 105 est avantageusement déterminée par venue en butée d'un épaulement radial 136 formé à la périphérie du corps de valve 106 avec la face avant 131 du joint 109, ce qui assure ainsi une réduction des chaînes de côtés pour la détermination précise des positions de repos respectives du moyeu 105 et du plongeur 114, comme décrit ci-dessous. Lorsque le servomoteur arrive au voisinage de sa position de repos, la zone d'extrémité extérieure 130 du second organe de positionnement 123, qui demeurait jusqu'alors plaqué contre le premier organe de positionnement 122 par le premier épaulement 119 du plongeur 114 sous l'effet du ressort de rappel 117, vient porter contre la face avant 131 du joint 109 provoquant ainsi une rotation dextrogyre (sur la figure 5) du second organe de positionnement 123 autour de la charnière à axe transversal C de sorte que, le second organe de positionnement 123 s'écartant angulairement du premier organe de positionnement 122 déplace par sa zone d'extrémité intérieure, le plongeur 114 (et la tige 116) vers l'avant de façon à réduire le jeu entre l'élément de clapet 111 et le siège de clapet 112. Le jeu au repos correspondant à la course morte d'actionnement du servomoteur, entre l'élément de clapet 111 et le siège fixe 112 est donc défini de façon précise et parfaitement reproductive en grande série par la position angulaire finalement adoptée par le second organe de positionnement 123 en appui, par sa zone d'extrémité intérieure 130, contre la surface 131, contre laquelle vient finalement porter à son tour l'épaulement 136 du moyeu 105.

## Revendications

1. Servomoteur d'assistance au freinage comprenant : - un boîtier (1);
- une structure de piston (4) divisant intérieurement le boîtier en deux chambres (5,6) ;
- un moyen de valve de distribution disposé dans un corps de valve (8) solidaire de la structure de piston (4) et actionnable par un organe d'entrée (16) pour créer sélectivement une différentielle de pression entre les chambres, le moyen de valve comportant :

- un plongeur (14) monté à coulissement axial dans un alésage central (15) du corps de valve (8) et relié à l'organe d'entrée (16), le plongeur comportant au moins un premier épaulement périphérique (21) et définissant, à une de ses extrémités, un premier siège de clapet (12), et

- un second siège de clapet (13) formé dans le corps de valve (8), concentriquement au premier siège de clapet (12), et

- un moyen de clapet (11) monté dans le corps de valve et sollicité élastiquement vers les premier et second siège de clapet,

- un ressort de rappel (17) prenant appui dans le corps de valve et sollicitant l'organe d'entrée (16) dans la direction opposée aux sièges de clapet, et

- des moyens de positionnement du plongeur disposés dans le corps de valve et coopérant avec le plongeur pour lui assigner au moins deux positions déterminées distinctes relativement au corps de valve, caractérisé en ce que les moyens de positionnement sont constitués par la combinaison :

- d'un premier organe de positionnement (23) fixé dans le corps de valve (8) et ayant une extrémité intérieure (26) susceptible de coopérer avec une première zone du premier épaulement (21) du plongeur (14) pour positionner ce dernier dans une position de retrait déterminée relativement au corps de valve (8) ; et

- d'un second organe de positionnement (30 ; 30') monté à pivotement dans le corps de valve (8) et ayant une première portion (29 ; 29') susceptible de coopérer avec une seconde zone du premier épaulement (21) du plongeur, et une seconde portion (31 ; 31') susceptible de coopérer, au voisinage de la position de repos du servomoteur avec un élément stationnaire (9 ; 10) lié au boîtier (1) pour placer, au moins dans cette position de repos, le second organe de positionnement dans une position angulaire déterminée positionnant, via sa première portion (29 ; 29'), le plongeur (14) dans une position de repos déterminée relativement au corps de valve (8).

2. Servomoteur selon la revendication 1, caractérisé en ce que la première zone du premier épaulement (21) du plongeur (14) et la seconde portion (31 ; 31') du second organe de positionnement (30 ; 30') coopérant avec l'élément stationnaire (9 ; 10) sont situés d'un même côté par rapport à un plan diamétral (D) du palpeur (14), la seconde zone du premier épaulement (21) étant situé de l'autre côté de ce plan diamétral.

3. Servomoteur selon la revendication 1 ou la revendication 2, caractérisé en ce que le plongeur (14) comporte un second épaulement périphérique (22) faisant face axialement au premier épaulement et susceptible de coopérer avec l'extrémité intérieure (26) du premier organe de positionnement (23) dans une troisième position déterminée du plongeur (14) relativement au corps de valve (8).

4. Servomoteur selon l'une des revendications 1 à 3, caractérisé en ce que le premier organe de positionnement est constitué par une clé sensiblement plate (23) montée dans une rainure radiale (24) du corps de valve et dont l'extrémité intérieure (26), en forme de U, fait saillie dans l'alésage central (15) du corps de valve (8) et dans une gorge annulaire périphérique (20) du plongeur (14) formant les premier et second épaulements (21,22).

5. Servomoteur selon l'une des revendications précédentes, caractérisé en ce que la première portion (29 ; 29') du second organe de positionnement (30 ; 30') est constituée par un élément allongé tourillonnant dans un logement transversal (28) formé dans le corps de valve (8) et comporte une surface de came (34) faisant saillie dans l'alésage central (15) du corps de valve (8).

6. Servomoteur selon la revendication 5, caractérisé en ce que la seconde portion (31 ; 31') du second organe de positionnement (30 ; 30') est constituée d'au moins un levier palpeur profilé extérieur au corps de valve (8) et solidarisé à une extrémité de l'élément allongé (29 ; 29').

7. Servomoteur selon la revendication 6, caractérisé en ce que le levier palpeur (31) et l'élément allongé (29) sont formés d'une seule pièce en tôle.

8. Servomoteur selon la revendication 7, caractérisé en ce que l'élément allongé (29) est supporté rotation dans le logement transversal (28) du corps de valve (8) par deux paliers en matériau plastique (35 ; 35').

9. Servomoteur selon la revendication 6, caractérisé en ce que le levier palpeur (31') comporte deux bras arrondis (39,39') épousant le profil périphérique du corps de valve (8) et reliés aux extrémités respectives de l'élément allongé (29').

10. Servomoteur selon l'une quelconque des revendications précédentes, caractérisé en ce que la seconde portion (31) du second organe de positionnement (30) vient porter en butée axiale, dans la position de repos du servomoteur, contre l'élément stationnaire (9).

11. Servomoteur selon l'une des revendications 1 à 9, caractérisé en ce que la seconde portion (31') du second organe de positionnement (30') coopère en contact de glissement, au voisinage de la position de repos du servomoteur, avec une surface de came (41) formée par l'élément stationnaire (10).

12. Servomoteur selon la revendication 11, caractérisé en ce que la surface de came (41) est formée par la paroi arrière (3) du boîtier (1).

13. Servomoteur d'assistance au freinage, comprenant : un boîtier une structure de piston (102) divisant intérieurement le boîtier en deux chambres (103,104) ; un moyen de valve de distribution disposé dans un corps de valve (106) solidaire de la structure de piston (102) et actionnable par un organe d'entrée (116) pour créer sélectivement une différentielle de pression entre les chambres, le moyen de valve comportant : un plongeur (114) monté à coulissement axial dans un alésage central coaxial (115) du corps de valve (106) et relié à l'organe d'entrée (116), le plongeur comportant au moins un premier épaulement périphérique (119) et définissant, à une de ses extrémités, un premier siège de clapet (113), un second siège de clapet (112) formé dans le corps de valve (106) concentriquement au premier siège de clapet (113), et un moyen de clapet (111) monté dans le corps de valve (106) et sollicité élastiquement vers les premier et second sièges de clapet ; un ressort de rappel (117), prenant appui dans le corps de valve (106) et sollicitant axialement l'organe d'entrée (116) dans la direction opposée aux sièges de clapet et des moyens de positionnement du plongeur disposés dans une ouverture radiale (121) du corps de valve (106) débouchant dans l'alésage central (115) et coopérant avec le plongeur pour lui assigner aux moins deux positions axiales déterminées distinctes relativement au corps de valve, caractérisé en ce que les moyens de positionnement sont constitués par la combinaison d'un premier organe de positionnement (122) monté fixe dans l'ouverture radiale (121) et ayant une zone d'extrémité intérieure s'étendant dans l'alésage central (115), et d'un second organe de positionnement (123) monté à basculement dans l'ouverture radiale (121) et comprenant une zone d'extrémité intérieure s'étendant dans l'alésage central (115) entre le premier épaulement (119) du plongeur (114) et la zone d'extrémité intérieure du premier organe de positionnement (122) et coopérant en contact d'articulation (C) avec cette dernière, une portion centrale et une extrémité extérieure (130) susceptible de coopérer, au voisinage de la position de repos du servomoteur, avec un élément stationnaire (109) lié au boîtier pour faire basculer le second organe de positionnement (123) depuis une première position où les deux zones d'extrémités intérieures sont accolées axialement, et une seconde position, dans la position de repos du servomoteur, où le second organe de positionnement (123), en appui par sa zone d'extrémité intérieure contre le premier épaulement (119), est écarté angulairement du premier organe de positionnement (122).

14. Servomoteur selon la revendication 13, caractérisé en ce que le premier organe de positionnement (122) comporte des ailes latérales (124) engagées dans des rainures en vis-à-vis (125) formées latéralement dans l'ouverture radiale (121).

15. Servomoteur selon la revendication 13 ou la revendication 14, caractérisé en ce que la zone d'extrémité intérieure du premier organe de positionnement (122) présente un profil en U avec deux bras latéraux (127) ayant des extrémités situées, en configuration de montage du côté de l'axe (A) de l'alésage central (115) opposé à l'extrémité extérieure (130) du second organe de positionnement (123), la zone d'extrémité intérieure de ce dernier présentant un profil en U avec deux bras latéraux (129) ayant des portions d'extrémité (132) s'étendant axialement au-dessus des extrémités des bras latéraux (127) de la zone d'extrémité intérieure du premier organe de positionnement (122).

16. Servomoteur selon la revendication 15, caractérisé en ce que le premier (122) et second (123) organes de positionnement sont chacun formés à partir d'une tôle métallique et présentent une configuration générale sensiblement plane.

17. Servomoteur selon l'une des revendications 13 à 16, caractérisé en ce que l'élément stationnaire est formé par une partie de joint (109) d'un ensemble annulaire (107) d'étanchéité et de guidage du corps de valve (106) porté par une paroi arrière (101) du boîtier.

18. Servomoteur selon la revendication 17, caractérisé en ce que le corps de valve (106) comprend une surface de butée (136) destinée à coopérer en appui avec l'élément stationnaire (109) dans la position de repos du servomoteur.

19. Servomoteur selon l'une des revendications 16 à 18, caractérisé en ce que le premier organe de positionnement (122) est monté à force dans les rainures latérales (125) de l'ouverture radiale (101).

20. Servomoteur selon l'une des revendications 16 à 18, caractérisé en ce qu'il comprend un organe de maintien (133) du premier organe de positionnement (122), constitué d'un ressort fil entourant le corps de valve (106).

21. Servomoteur selon la revendication 20, caractérisé en ce que le ressort fil (133) présente une forme en C avec deux portions d'extrémités (134) s'étendant axialement dans l'ouverture radiale (121) et coopérant avec l'extrémité du premier organe de positionnement (122) opposée à sa zone d'extrémité intérieure.

22. Servomoteur selon l'une des revendications précédentes, caractérisé en ce que le premier épaulement (119) du plongeur (114) est formé par une gorge annulaire périphérique (118) définissant un second épaulement annulaire (120) faisant face axialement au premier épaulement (119) et susceptible de coopérer avec la zone d'extrémité intérieure du premier organe de positionnement (122) dans une troisième position axiale déterminée du plongeur (114) relativement au corps de valve (106).

**Patentansprüche**

1. Servoantrieb für eine Bremshilfe, mit:
– einem Gehäuse (1);
– einer Kolbenstruktur (4), die das Gehäuse innerlich in zwei Kammern (5, 6) unterteilt;
– einer Verteilerventileinrichtung, die in einem Ventilkörper (8) angeordnet ist, welcher mit der Kolbenstruktur (4) fest verbunden ist und durch ein Eingangslied (16) betätigt werden kann, um zwischen den Kammern eine Druckdifferenz selektiv zu erzeugen, wobei die Ventileinrichtung umfaßt:
– einen Ventilkolben (14), der in einer zentralen Bohrung (15) des Ventilkörpers (8) axial gleitend gelagert und mit dem Eingangslied (16) verbunden ist, wobei der Ventilkolben wenigstens eine erste Umfangsschulter (21) umfaßt und an einem seiner Enden einen ersten Ventilsitz (12) bildet, sowie
– einen zweiten Ventilsitz (13), der in dem Ventilkörper (8) konzentrisch zu dem ersten Ventilsitz (12) gebildet ist, und
– ein Ventilmittel (11), das in dem Ventilkörper angebracht und zu dem ersten Ventilsitz sowie zu dem zweiten Ventilsitz hin elastisch beaufschlagt ist, – eine Rückholfeder (17), welche sich in dem Ventilkörper abstützt und das Eingangslied (16) in der von den Ventilsitzen abgewandten Richtung beaufschlagt, und
– Mittel zum Positionieren des Ventilkolbens, die in dem Ventilkörper angeordnet sind und mit dem Ventilkolben zusammenwirken, um ihm wenigstens zwei in bezug auf den Ventilkörper bestimmte, verschiedene Positionen zuzuweisen, dadurch gekennzeichnet, daß die Mittel zum Positionieren aus folgender Kombination bestehen:
- einem ersten Positionierteil (23), das in dem Ventilkörper (8) befestigt ist und ein inneres Ende (26) aufweist, das mit einer ersten Zone der ersten Schulter (21) des Ventilkolbens (14) zusammenwirken kann, um diesen in einer in bezug auf den Ventilkörper (8) bestimmten Rückzugsposition zu positionieren, und
- einem zweiten Positionierteil (30, 30'), das in dem Ventilkörper (8) schwenkbar gelagert ist und einen ersten Abschnitt (29; 29'), der mit einer zweiten Zone der ersten Schulter (21) des Kolbens zusammenwirken soll, sowie einen zweiten Abschnitt (31; 31') umfaßt, der in der Nähe der Ruhestellung des Servoantriebs mit einem feststehenden Element (9, 10) zusammenwirken soll, das mit dem Gehäuse (1) verbunden ist, um wenigstens in dieser Ruhestellung den zweiten Positionierteil in eine erste bestimmte Winkelposition zu setzen, die über seinen ersten Abschnitt (29; 29') den Ventilkolben (14) in einer Ruhestellung positioniert, welche in bezug auf den Ventilkörper (8) bestimmt ist.

2. Servoantrieb nach Anspruch 1, dadurch gekennzeichnet, da die erste Zone der ersten Schulter (21) des Ventilkolbens (14) sowie der zweite Abschnitt (31; 31') des zweiten Positionierteils (30; 30'), der mit dem feststehenden Element (9; 10) zusammenwirkt, auf einer selben Seite in bezug auf eine Diametralebene (D) des Tasters (14) liegen, wobei die zweite Zone der ersten Schulter (21) auf der anderen Seite dieser Diametralebene liegt.

3. Servoantrieb nach dem Anspruch 1 oder 2, dadurch gekennzeichnet, daß der Ventilkolben (14) eine zweite Umfangsschulter (22) umfaßt, welche der ersten Schulter axial gegenüberliegt und dazu geeignet ist, mit dem Innenende (26) des ersten Positionierteils (23) in einer dritten bestimmten Stellung des Ventilkolbens in bezug auf den Ventilkörper (8) zusammenzuwirken.

4. Servoantrieb nach einem der Ansprüche 1 bis 3, dadurch gekennzeichnet, daß das erste Positionierteil aus einem im wesentlichen flachen Schlüssel (23) besteht, der in einer radialen Rille (24) des Ventilkörpers angebracht ist und dessen U-förmiges Innenende (26) in der zentralen Bohrung (15) des Ventilkörpers (8) sowie aus einer ringförmigen Umfangsnut (20) des Ventilkolbens (14) herausragt, welche die erste Schulter (21) sowie die zweite Schulter (22) bildet.

5. Servoantrieb nach einem der vorstehenden Ansprüche, dadurch gekennzeichnet, daß der erste Abschnitt (29; 29') des zweiten Positionierteils (30; 30') aus einem langgestreckten Element besteht, das in einer in dem Ventilkörper (8) gebildeten Queraufnahme (28) drehbar gelagert ist und eine Kurvenfläche (34) umfaßt, die in der Zentralbohrung (15) des Ventilkörpers (8) herausragt.

6. Servoantrieb nach Anspruch 5, dadurch gekennzeichnet, da der zweite Abschnitt (31; 31') des zweiten Positionierteils (30; 30') aus wenigstens einem Profil-Tasthebel besteht, der in bezug auf den Ventilkörper (8) außen liegt und mit einem Ende des langgestreckten Elementes (29; 29') fest verbunden ist.

7. Servoantrieb nach Anspruch 6, dadurch gekennzeichnet, daß der Tasthebel (31) sowie das langgestreckte Element (29) aus einem einzigen Blechteil bestehen.

8. Servoantrieb nach Anspruch 7, dadurch gekennzeichnet, daß das langgestreckte Element (29) in der Queraufnahme (28) des Ventilkörpers (8) durch zwei Lager (35; 35') aus einem Kunststoff drehbar gelagert ist.

9. Servoantrieb nach Anspruch 6, dadurch gekennzeichnet, daß der Tashebel (31') zwei gerundete Arme (39, 39') umfaßt, welche sich an das Umfangsprofil des Ventilkörpers (8) anschmiegen und mit den jeweiligen Enden des langgestreckten Elementes (29') verbunden sind.

10. Servoantrieb nach einem der vorstehenden Ansprüche, dadurch gekennzeichnet, daß der zweite Abschnitt (31) des zweiten Positionierteils (30) in der Ruhestellung des Servoantriebs in axiale Anlage an das feststehende Element (9) gelangt.

11. Servoantrieb nach einem der Ansprüche 1 bis 9, dadurch gekennzeichnet, daß der zweite Abschnitt (31') des zweiten Positionierteils (30') in der Nähe der Ruhestellung des Servoantriebs mit einer Kurvenfläche (41), welche durch das feststehende Element (10) gebildet ist, in Gleitkontakt zusammenwirkt.

12. Servoantrieb nach Anspruch 11, dadurch gekennzeichnet, daß die Kurvenfläche (41) durch die rückwärtige Wand (3) des Gehäuses (1) gebildet ist.

13. Servoantrieb für eine Bremshilfe, mit: einem Gehäuse; einer Kolbenstruktur (102), die das Gehäuse innerlich in zwei Kammern (103, 104) unterteilt; einer Ventilverteilereinrichtung, die in einem Ventilkörper (106) angeordnet ist, welcher mit der Kolbenstruktur (102) fest verbunden ist und über ein Eingangsglied (116) betätigt werden kann, um eine Druckdifferenz zwischen den Kammern selektiv zu erzeugen, wobei die Ventileinrichtung umfaßt: einen Ventilkolben (114), der in einer zu dem Ventilkörper (106) koaxialen Zentralbohrung (115) mit axialer Gleitführung gelagert und mit dem Eingangsglied (116) verbunden ist, wobei der Ventilkolben wenigstens eine erste Umfangsschulter (119) sowie an einem seiner Enden einen ersten Ventilsitz (113), einen zweiten, in dem Ventilkörper (106) konzentrisch zu dem ersten Ventilsitz (113) gebildeten Ventilsitz (112), sowie Ventilmittel (111) bildet, welche in dem Ventilkörper (106) angebracht und zu dem ersten Ventilsitz sowie zu dem zweiten Ventilsitz hin elastisch beaufschlagt sind; eine Rückholfeder (117), die sich in dem Ventilkörper (106) abstützt und das Eingangsglied (116) in der von den Ventilsitzen abgewandten Richtung axial beaufschlagt; und Mittel zum Positionieren des Ventilkolbens, welche in einer radialen Öffnung (121) des Ventilkörpers (106) angeordnet sind, die in die Zentralbohrung (115) ausmündet, und mit dem Ventilkolben zusammenwirken, um ihm wenigstens zwei in bezug auf den Ventilkörper bestimmte, verschiedene axiale Positionen zuzuweisen, dadurch gekennzeichnet, da die Positioniermittel aus der Kombination zwischen einem ersten Positionierteil (122), das in der Radialöffnung fest angebracht ist und eine in der Zentralbohrung (115) sich erstreckende innere Endzone aufweist, und einem zweiten Positionierteil (123) bestehen, das in der Radialöffnung (121) schwenkbar gelagert ist und eine innere Endzone, die sich in der Zentralbohrung (115) zwischen der ersten Schulter (119) des Ventilkolbens (114) und der inneren Endzone des ersten Positionierteils (122) erstreckt und in Gelenkkontakt (C) mt dieser zusammenwirkt, einem Zentralabschnitt sowie ein Außenende (130) umfaßt, welches in der Nähe der Ruhestellung des Servoantriebs mit einem mit dem Gehäuse verbundenen feststehenden Element (109) zusammenwirken soll, um das zweite Positionierteil (123) ausgehend von einer ersten Position, in welcher die beiden inneren Endzonen axial gegeneinander anliegen und einer zweiten Position in die Ruhestellung des Servoantriebs umkippen zu lassen, in welcher das zweite Positionierteil (123), das sich über seine innere Endzone auf die erste Schulter (119) abstützt, gegen das erste Positionierteil (122) winkelverschoben ist.

14. Servoantrieb nach Anspruch 13, dadurch gekennzeichnet, daß das erste Positionierteil (122) Seitenflügel (124) umfaßt, welche in sich gegenüberliegenden Rillen (125) eingespannt sind, die seitlich in der Radialöffnung (121) gebildet sind.

15. Servoantrieb nach Anspruch 13 oder 14, dadurch gekennzeichnet, daß die innere Endzone des ersten Positionierteils (122) ein U-förmiges Profil mit zwei Seitenarmen (127) aufweist, wovon die Enden in Montagekonfiguration auf der Seite der Achse (A) der Zentralbohrung (115) liegen, die dem Außenende (130) des zweiten Positionierteils (123) abgewandt ist, wobei die innere Endzone desselben ein U-förmiges Profil mit zwei Seitenarmen (129) aufweist, wovon die Endabschnitte (132) sich über die Enden der Seitenarme (127) der inneren Endzone des ersten Positionierteils (122) axial erstrecken.

16. Servoantrieb nach Anspruch 15, dadurch gekennzeichnet, daß das erste Positionierteil (122) und das zweite Positionierteil (123) aus einem Metallblech bestehen und eine allgemein im wesentlichen flache Struktur aufweisen.

17. Servoantrieb nach einem der Ansprüche 13 bis 16, dadurch gekennzeichnet, daß das feststehende Element aus einem Dichtungsteil (109) einer ringförmigen Dichtungseinheit (107) zur Führung des Ventilkörpers (106), welche von einem rückwärtigen Teil (101) des Gehäuses getragen wird, gebildet ist.

18. Servoantrieb nach Anspruch 17, dadurch gekennzeichnet, daß der Ventilkörper (106) eine Anschlagfläche (136) umfaßt, welche für ein unter Abstützung stattfindendes Zusammenwirken mit dem feststehenden Element (109) in der Ruhestellung des Servoantriebs bestimmt ist.

19. Servoantrieb nach einem der Ansprüche 16 bis 18, dadurch gekennzeichnet, daß das erste Positionierteil (122) in den Seitenrillen (125) der Radialöffnung (101) eingepreßt ist.

20. Servoantrieb nach einem der Ansprüche 16 bis 18, dadurch gekennzeichnet, daß er ein Glied (133) zum Festhalten des ersten Positionierteils (122) umfaßt, das aus einer den Ventilkörper (106) umgebenden Drahtfeder besteht.

21. Servoantrieb nach Anspruch 20, dadurch gekennzeichnet, daß die Drahtfeder (133) eine C-Form mit zwei Endabschnitten (134) aufweist, welche sich in der Radialöffnung (121) axial erstrecken und mit dem Ende des ersten Positionierteils (122), welches seiner inneren Endzone abgewandt ist, zusammenwirken.

22. Servoantrieb nach einem der vorstehenden Ansprüche, dadurch gekennzeichnet, daß die erste Schulter (119) des Ventilkolbens (114) durch eine ringförmige Umfangsnut (118) gebildet ist, welche eine zweite ringförmige Schulter (120) bestimmt, die der ersten Schulter (119) axial gegenüberliegt und mit der inneren Endzone des ersten Positionierteils (122) in einer dritten bestimmten, axialen Stellung des Ventilkolbens (114) in bezug auf den Ventilkörper (106) zusammenwirken soll.

**Claims**

1. Brake booster comprising a housing (1), a piston structure (4) dividing the housing internally into two chambers (5, 6), a distribution valve means arranged in a valve body (8) integral with the piston structure (4) and actuable by means of an input member (16) to generate a pressure differential selectively between the chambers, the valve means comprising a plunger (114) mounted axially slideably in a central bore (15) of the valve body (8) and connected to the input member (16), the plunger having at least one first peripheral shoulder (21) and defining, at one of its ends, a first flap seat (12), and a second flap seat (13) formed in the valve body (8) concentrically relative to the first flap seat (12), and a flap means (11) mounted in the valve body and stressed elastically towards the first and second flap seats, a restoring spring (17) bearing in the valve body and stressing the input member (16) in the opposite direction to the flap seats, and means of positioning the plunger which are arranged in the valve body and which interact with the plunger to assign to it at least two separate specific positions relative to the valve body, characterized in that the positioning means consist of the combination of a first positioning member (23) fastened in the valve body (8) and having an inner end (26) capable of interacting with a first zone of the first shoulder (21) of the plunger (14), to position the latter in a specific position of retraction relative to the valve body (8), and of a second positioning member (30; 30') mounted pivotally in the valve body (8) and having a first portion (29; 29') capable of interacting with a second zone of the first shoulder (21) of the plunger, and a second portion (31; 31') capable of interacting, in the vicinity of the position of rest of the booster, with a stationary element (9; 10) connected to the housing (1), in order, at least in this position of rest, to place the second positioning the plunger (14), via its first portion (29; 29'), in a specific position of rest relative to the valve body (8).

2. Booster according to Claim 1, characterized in that the first zone of the first shoulder (21) of the plunger (14) and the second portion (31; 31') of the second positioning member (30; 30') interacting with the stationary element (9; 10) are located on one and the same side relative to a diametral plane (D) of the tracer (14), the second zone of the first shoulder (21) being located on the other side of this diametral plane.

3. Booster according to Claim 1 or Claim 2, characterized in that the plunger (14) has a second peripheral shoulder (22) facing the first shoulder axially and capable of interacting with the inner end (26) of the first positioning member (23) in a third specific position of the plunger (14) relative to the valve body (8).

4. Booster according to one of Claims 1 to 3, characterized in that the first position member consists of a substantially flat key (23) which is mounted in a radial groove (24) of the valve body and of which the U-shaped inner end (26) projects into the central bore (15) of the valve body (8) and into a peripheral annular groove (20) of the plunger (14) forming the first and second shoulder (21, 22).

5. Booster according to any of the preceding claims, characterized in that the first portion (29; 29') of the second positioning member (30; 30') consists of an elongate element pivoting in a transverse receptacle (28) made in the valve (8) and has a cam surface (34) projecting into the central bore (15) of the valve body (8).

6. Booster according to Claim 5, characterized in that the second portion (31; 31') of the second positioning member (30; 30') consists of at least one profiled tracer lever located outside the valve body (8) and fixed to one end of the elongate element (29; 29').

7. Booster according to Claim 6, characterized in that the tracer lever (31) and the elongate element (29) are produced in one piece from sheet metal.

8. Booster according to Claim 7, characterized in that the elongate element (29) is supported rotatably in the transverse receptacle (28) of the valve body (8) by means of two plastic bearings (35; 35').

9. Booster according to Claim 66, characterized in that the tracer lever (31') has two rounded arms (39, 39') matching the peripheral profile of the valve body (8) and connected to the respective ends of the elongate element (29').

10. Booster according to any of the preceding claims, characterized in that the second portion (31) of the second positioning member (30) bears against the stationary element (9) by coming up against it axially, in the position of rest of the booster.

11. Booster according to any of Claims 1 to 9, characterized in that the second portion (31') of the second positioning member (30') interacts in sliding contact, in the vicinity of the position of rest of the booster, with a cam surface (41) formed by the stationary element (10).

12. Booster according to Claim 11, characterized in that the cam surface (41) is formed by the rear wall (3) of the housing (1).

13. Brake booster comprising a housing, a piston structure (102) dividing the housing internally into two chambers (103, 104), a distribution valve means arranged in a valve body (106) integral with the piston structure (102) and actuable by means of an input member (116) to generate a pressure differential selectively between the chambers, the valve means comprising a plunger (114) mounted axially slideably in a coaxial central bore (115) of the valve body (106) and connected to the input member (116), the plunger having at least one peripheral shoulder (119) and defining, at one of its ends, a first flap seat (113), a second flap seat (112) formed in the valve body (106) concentrically relative to the first flap seat (113) and a flap means (111) mounted in the valve body (106) and stressed elastically towards the first and second flap seats, a restoring spring (117) bearing in the valve body (106) and axially stressing the input member (116) in the direction away from the flap seats, and means of positioning the plunger arranged in a radial opening (121) of the valve body (106) opening into the central bore (115) and interacting with the plunger to assign to it at least two separate specific axial positions relative to the valve body, characterized in that the positioning means consist of the combination of a first positioning member (122) mounted fixably in the radial opening (121) and having an inner end zone extending in the central bore (115) and of second positioning member (123) mounted rockingly in the radial opening (121) and comprising an inner end zone extending in the central bore (115) between the first shoulder (119) of the plunger (114) and the inner end zone of the first positioning member (122) and interacting with the latter in hinged contact (C), a central portion and an outer end (130) capable of interacting, in the vicinity of the rest position of the booster, with a stationary element (109) connected to the housing to cause the second positioning member (123) to rock from a first position in which the two inner end zones are axially adjacent, and a second position, in the rest position of the booster, in which the second positioning member (123), bearing against the first shoulder (119) by means of its inner end zone, is set angularly at a distance from the first positioning member (122).

4. Booster according to claim 13, characterized in that the first positioning member (122) has lateral fins (124) engaged in opposing grooves (125) formed laterally in the radial opening (121).

15. Booster according to either of claims 13 and 14, characterized in that the inner end zone of the first positioning member (22) exhibits a U-shaped profile with two lateral arms (127) having ends situated, in the assembly configuration, on the axis (A) side of the central bore (115) away from the outer end (130) of the second positioning member (123), the inner end zone of the latter exhibiting a U-shaped profile with two lateral arms (129) having end portions (132) extending axially above the ends of the lateral arms (127) of the inner end zone of the first positioning member (122).

16. Booster according to claim 15 characterized in that the first (122) and second (123) positioning members are each formed from a metal sheet and exhibit a substantially plane general shape.

17. Booster according to one of claims 13 and 16, characterized in that the stationary element is formed by a seal part (109) of a guide and sealing annular assembly (107) of the valve body (106) carried by a rear housing wall (101).

18. Booster according to claim 17, characterized in that the valve body (106) comprises a bearing surface (136) intended to interact with the stationary element (109) by coming up against it in the rest position of the booster.

19. Booster according to one of claims 16 to 18 characterized in that the first positioning member (122) is force-fitted in the lateral grooves (125) or the radial opening (121).

20. Booster according to one of claims 16 to 18, characterized in that it comprised a retaining member (133) of the first positioning member (122) consisting of a wire spring surrounding the valve body (106).

21. Booster according to claim 20, characterized in that the wire spring (133) exhibits a C-shape with two end portions (134) extending axially in the radial opening (121) and interacting with the end of the first positioning member (122) away from its inner end zone.

22. Booster according to one of the preceding claims, characterized in that the first shoulder (119) of the plunger (114) is formed by a peripheral annular groove (118) defining a second annular shoulder facing the first shoulder (119) axially and capable of interacting with the inner end zone of the first positioning member (122) in a third specific axial position of the plunger (114) relative to the valve body (106).

FIG.1

FIG.3

FIG. 2

FIG. 4

FIG_5

FIG. 6

FIG. 7